Europäisches Patentamt

European Patent Office

Office européen des brevets

(19)

(11) EP 1 347 288 A2

(12) EUROPÄISCHE PATENTANMELDUNG

(43) Veröffentlichungstag:
24.09.2003 Patentblatt 2003/39

(51) Int Cl.⁷: G01N 25/14

(21) Anmeldenummer: 03004448.1

(22) Anmeldetag: 27.02.2003

(84) Benannte Vertragsstaaten:
AT BE BG CH CY CZ DE DK EE ES FI FR GB GR
HU IE IT LI LU MC NL PT SE SI SK TR
Benannte Erstreckungsstaaten:
AL LT LV MK RO

(30) Priorität: 20.03.2002 DE 10212362

(71) Anmelder: FRAUNHOFER-GESELLSCHAFT ZUR
FÖRDERUNG DER
ANGEWANDTEN FORSCHUNG E.V.
80636 München (DE)

(72) Erfinder:
• Müller, Rudolf, Prof.
82319 Starnberg (DE)

• Mersmann, Alfons, Prof.
82131 Stockdorf (DE)
• Langer, Peter
80992 München (DE)
• Löffelmann, Michael
81369 München (DE)
• Neumeier, Karl
82024 Taufkirchen (DE)

(74) Vertreter: Laufhütte, Dieter, Dr.-Ing. et al
Lorenz-Seidler-Gossel
Widenmayerstrasse 23
80538 München (DE)

(54) **Verfahren zur Übersättiungsmessung und Vorrichtung zur Durchführung des Verfahrens**

(57) Die Erfindung betrifft ein Verfahren zur Messung der Übersättigung in einem Kristallisationsreaktor, bei dem durch Kühlen, Heizen, Lösungsmittelentzug, Zugabe eines weiteren Stoffes oder durch Kombination der vorgenannten Maßnahmen eine Zone gebildet wird, in welcher der Quotient aus der Konzentration des gelösten Stoffes und der zugehörigen Sättigungskonzentration höher als im übrigen Kristallisationsreaktor ist oder in der die Konzentration des gelösten Stoffes im wesentlichen seiner zugehörigen Sättigungskonzentration entspricht. Erfindungsgemäß wird in diese Zone Strahlung im IR,- sichtbaren oder UV-Bereich eingespeist und es wird das Auftreten von Kristallen in dieser Zone durch Messung von Streustrahlung detektiert.

Die Erfindung betrifft weiterhin Vorrichtungen zur Durchführung des erfindungsgemäßen Verfahrens.

**Beschreibung**

Die Erfindung betrifft ein Verfahren zur Übersättigungsmessung nach dem Oberbegriff des Anspruchs 1 sowie Vorrichtungen zur Durchführung dieses Verfahrens.

Bei der Feststoffproduktion durch Kristallisation (Kühlungs-, Verdampfungs-, Verdrängungs- und Reaktionskristallisation) werden Kristallisate mit bestimmten Qualitätseigenschaften, beispielsweise Korngrößenverteilungen, Kornformen und Reinheit angestrebt, die sich nur bei der optimalen Übersättigung im Kristallisator erzielen lassen. Diese optimale Übersättigung sollte möglichst immer und überall im Kristallisator aufrecht erhalten werden, was vor allem für absatzweise betriebene Apparate sehr wichtig ist.

Ein Betrieb von Kristallisationsreaktoren (Kristallisatoren) bei optimaler Übersättigung scheitert oft, weil industriell einsetzbare Übersättigungssensoren für die Steuerung und Regelung für solche Apparate fehlen. Zwar sind Sensoren bekannt, welche einsetzbar sind, wenn sich die Löslichkeit eines Stoffes im Lösungsmittel nennenswert mit der Temperatur ändert. Industriell werden aber auch viele Stoffe kristallisiert, bei denen sich die Löslichkeit kaum oder gar nicht mit der Temperatur ändert.

Bereits aus der DE 43 40 383 C2 ist ein Verfahren zur Messung der Übersättigung von Lösungen fester Stoffe in Flüssigkeiten bekannt. Hier wird zur Messung der Übersättigung im Kristallisationsreaktor durch Kühlen, Heizen, Lösungsmittelentzug oder Zugabe eines weiteren Stoffes (sogenannte Verdrängungskristallisation) oder auch durch Kombination der vorgenannten Maßnahmen auf der Oberfläche eines Kühl-, Heiz- oder Verdampfungselements und um diese herum eine Zone gebildet, in welcher der Quotient aus der Konzentration des gelösten Stoffes und der zugehörigen Sättigungskonzentration höher als im übrigen Kristallisationsreaktor ist. Es wird nun die Zeit bestimmt, bei der die Kristallisation auf der Oberfläche auftritt und diese so erhaltene Zeit wird mit vorher bestimmten Eichwerten für das selbe Stoffsystem verglichen, um die aktuelle Übersättigung festzustellen. Bei der Realisierung dieses in der DE 43 40 383 C2 vorgeschlagenen Messverfahrens ergeben sich insbesondere für die vorgenannten Stoffsysteme, bei denen sich die Löslichkeit kaum oder gar nicht mit der Temperatur ändert, Probleme in der genauen Detektierung des Beginns der Kristallisation. Im industriellen Einsatz hat sich bei den dort beschriebenen Messverfahren, die im wesentlichen auf das Einsetzen von Kristallisation auf Oberflächen entsprechender Kühl- oder Heizelemente oder dergleichen abstellte, ergeben, dass insbesondere die im Kristallisationsreaktor auftretenden Strömungen und die mit der Strömung mitgerissenen Kristalle das Messergebnis stören und so eine Reproduzierbarkeit der Übersättigungsmessung erschweren oder gar unmöglich machen.

Es ist bekannt, zur Messung der einsetzenden Kristallisation OFW-Elemente und/oder Interdigitalsensoren einzusetzen. Außerdem werden bereits Messanordnungen technisch eingesetzt, bei denen zur Bestimmung der optischen Transmission die in einem Kristallisator vorhandene Kristallkonzentration bestimmt wird, wobei jedoch die Kristallisationsbedingungen am Ort der Messung nicht geändert werden, d.h. es wird weder durch Kühlung noch durch Änderung der Konzentration im Messvolumen die Kristallisation "vorweggenommen".

Bei der Detektion mit OFW-Elementen bzw. Interdigital-Sensoren wird die Änderung einer Stoffeigenschaft (Viskosität, Dichte, Leitfähigkeit, die Elektrizitätskonstante) bestimmt. Da diese Sensoren sehr empfindlich sind, können kleine relative Änderungen (hervorgerufen durch Kristallisation) dieser Werte detektiert werden. Diese hohe Empfindlichkeit bewirkt andererseits eine große Empfindlichkeit gegenüber Störgrößen wie zum Beispiel Temperaturschwankungen bei Strömungsinhomogenitäten durch Rührer etc. Außerdem bestimmt die Haftfähigkeit der Kristalle an der gekühlten Oberfläche (die beim OFW-Sensor gleichzeitig Sensoroberfläche ist) die Größe des Signals, was zu unerwünschten Signalschwankungen führt. Hinzu kommt, dass sich Sensoren, welche durch Kühlen oder Heizen eine zusätzliche Übersättigung und Kristallisation bewirken, nicht sinnvoll einsetzen lassen, wenn sich die Löslichkeit c* nur wenig oder überhaupt nicht mit der Temperatur T ändert. Dies ist zum Beispiel dann ungefähr der Fall, wenn die Steigung der Löslichkeitskurve

$$(dc^*/dt)\,(T/c^*) < 2$$

ist.

In solchen Fällen kann eine Steigung der Übersättigung nur durch eine Konzentrationsänderung der Lösung erzielt werden und zwar durch:

- das Entfernen von Lösungsmitteln (zum Beispiel durch Verdampfen, Adsorption, Extraktion mit einem Extraktionsmittel);

- die Zugabe eines Verdrängungsmittels oder

- die Zugabe von gelösten Stoffen.

Demzufolge liegt der vorliegenden Erfindung ausgehend von dem Verfahren zur Übersättigungsmessung nach der DE 43 40 383 C2, ein störresistentes Sensorsystem zu schaffen, mit dem der Einsatz der Kristallisation in einer entsprechenden Zone bzw. einem Messvolumen sicher und zuverlässig sowie reproduzierbar messbar ist. Insbesondere soll die Übersättigungsmessung auch bei Stoffen mit geringer Abhängigkeit der Löslichkeitskonzentration von der Temperatur einsetzbar sein.

Erfindungsgemäß wird diese Aufgabe ausgehend von einem aus der DE 43 40 383 C2 bekannten Verfahren mit den Merkmalen nach dem Oberbegriff des Anspruchs 1 durch Kombination mit den Merkmalen des kennzeichnenden Teils des Anspruchs 1 gelöst. Demnach wird in die Zone der gegenüber dem übrigen Kristallisationsreaktor veränderten Konzentration Strahlung im IR-, sichtbaren oder UV-Bereich eingespeist. Das Auftreten von Kristallen wird in dieser Zone durch Messung von Streustrahlung detektiert.

Betrachtet man die Änderungen physikalischer Eigenschaften beim Beginn der Kristallisation, stellt man fest, dass sich die Dichte bzw. Viskosität nur gering ändern, dass sich die Leitfähigkeit bzw. die Elektrizitätskonstante frequenzabhängig mäßig ändert, dass sich hinsichtlich der optischen Transmission eine Verringerung der Transmission ergibt und dass bei der optischen Streuung eine große relative Zunahme zu beobachten ist. Damit ist die optische Streuung die Größe, die bei Auftreten der Kristallisation sich praktisch von 0 zu einem endlichen Wert ändert.

Die Nutzung der optischen Streuung ermöglicht eine preisgünstige, störresistente und wirksame Bestimmung des Einsetzens der Kristallisation in einem begrenzten Volumen, beispielsweise einer Schicht über einer gekühlten Oberfläche. Das vorgeschlagene System ist, wie Versuche gezeigt haben, resistent gegen Störungen und gleichzeitig empfindlich genug, um die gewünschte Kristallisation zu detektieren. Gleichzeitig ist das optische Detektionsverfahren nicht an eine Detektion der Kristallisation an einer Feststoffoberfläche gebunden und ermöglicht so Ausführungsformen, die auch in einem Volumen das Eintreten einer zusätzlichen Kristallisation durch Entfernen von Lösungsmitteln, zum Beispiel durch Verdampfen usw. ermöglicht. Damit lässt sich insbesondere eine bessere Resistenz gegen Störungen innerhalb des Kristallisationsreaktors erzielen. Zusätzlich lässt sich das vorgeschlagene Verfahren zur Übersättigungsmessung auch auf Stoffsysteme mit geringer Abhängigkeit der Löslichkeitskonzentration von der Temperatur anwenden.

Bevorzugte Ausgestaltungen der Erfindung ergeben sich aus den sich an den Hauptanspruch anschließenden Unteransprüchen 2 bis 6.

Das erfindungsgemäße Verfahren lässt sich insbesondere auch durch Vorrichtungen nach den Ansprüchen 7 bis 21 durchführen. Demnach kann die Vorrichtung zur Durchführung eines Verfahrens aus einer Sonde bestehen, die gegebenenfalls hintereinander an verschiedenen Stellen des Kristallisationsreaktors zur Messung der lokalen Übersättigung verwendet werden kann. Es ist auch denkbar, dass mehrere Sonden gleichzeitig in dem Kristallisationsreaktor zur Durchführung der Messung angeordnet sind. Mit diesen Sonden kann ein vorgegebenes Raster im Reaktionsreaktor abgefahren werden, um die sich bei den unterschiedlichen Strömungsbedingungen einstellenden lokalen Übersättigungen zu messen und gegebenenfalls mit geeigneten statistischen Methoden weiter aufzubereiten.

Die Strahlung kann in der erfindungsgemäßen Vorrichtung durch einen Lichtleiter einspeisbar sein und durch eine ohne Steuerung entkoppelte Lichtleitfaser auskoppelbar sein. Es können auch Linsen- und Spiegeloptiken vorgesehen werden, um einen möglichst großen Teil der gesamten Zone zu bestrahlen und um so einen möglichst großen Teil der Streustrahlung einem Detektor zuzuführen.

Bevorzugte Ausgestaltungen der erfindungsgemäßen Vorrichtung ergeben sich aus den Unteransprüchen 10 bis 21.

Weitere Einzelheiten und Vorteile der Erfindung ergeben sich aus den anhand der Figuren erläuterten Ausführungsbeispielen. Es zeigen:

Figur 1:     den schematischen Aufbau einer Streulichtmessanordnung zur Verwendung in der vorliegenden Erfindung,

Figur 2:     einen Signalverlauf für eine Messvorrichtung gemäß Figur 1,

Figur 3:     eine schematische Darstellung einer Vorrichtung der vorliegenden Erfindung mit einer Spiegeloptik zur Konzentration des Streulichts,

Figur 4:     eine andere Ausgestaltung der Spiegeloptik für eine erfindungsgemäße Messvorrichtung,

Figur 5:     eine weitere Ausführungsvariante des Streulichtmessaufbaus unter Verwendung eines Streifengitters,

Figur 6:     den Signalverlauf des Streulichts bei einem bewegten Kristall,

Figur 7:        eine schematisch dargestellte Sonde gemäß einer ersten Ausführungsform der vorliegenden Erfindung,

Figur 8:        eine schematische Sonde gemäß einer zweiten Ausführungsvariante der vorliegenden Erfindung,

Figur 9:        den Signalverlauf des gemessenen Streulichts in Figur 8 und

die Figuren 10 bis 17:        weitere Ausführungsformen für Sondenaufbauten nach unterschiedlichen Ausführungsbeispielen der vorliegenden Erfindung.

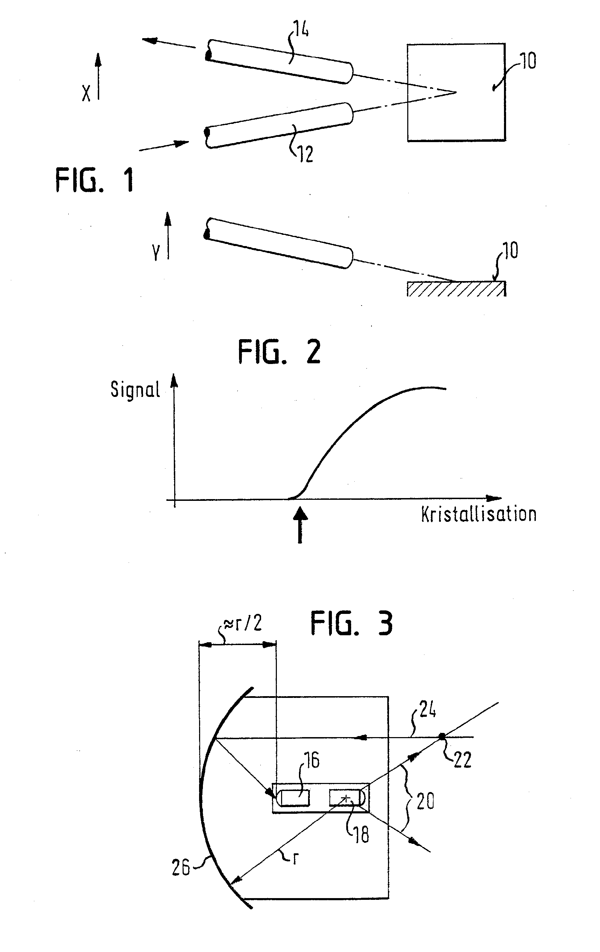

In Figur 1 ist ein einfacher Aufbau zur Durchführung der Streulichtmessung in der Zone der erhöhten Konzentration der gelösten Stoffe gezeigt. Im hier dargestellten Ausführungsbeispiel ist im oberen Teil eine Draufsicht und im unteren Teil eine Seitenansicht gezeigt, wobei mit 10 eine gekühlte Fläche bezeichnet ist, auf der sich bei entsprechender Übersättigung die Kristalle bilden. Über einen Glasfaserlichtleiter 12 wird Licht auf die Oberfläche 10 gestrahlt und über einen Glasfaserlichtleiter 14 wird das aufgenommene Meßsignal ausgekoppelt. In Figur 2 wird ein typischer Signalverlauf, der mit der Meßanordnung nach Figur 1 detektierbar ist, dargestellt. An der durch den Pfeil gekennzeichneten Stelle setzt Kristallisation ein. Es ist ein deutlich detektierbarer und auch reproduzierbarer Signalverlauf ersichtlich.

In der Ausführungsform gemäß Figur 3 ist schematisch der Aufbau für eine Spiegelanordnung-Streulichtdetektion gezeigt. Hier wird durch ein LED bzw. eine Laserdiode 18 Licht in Pfeilrichtung 20 ausgesandt und beispielsweise von einem Streuzentrum 22 gestreut. Das Streulicht 24 wird von einem gewölbten Spiegel 26 aufgefangen und auf den Brennpunkt konzentriert, in welchem eine Fotodiode 16 angeordnet ist. Hierdurch kann ein vergleichsweise größerer Teil der Streustrahlung dem Detektor, d.h. der Fotodiode 16, zugeführt werden.

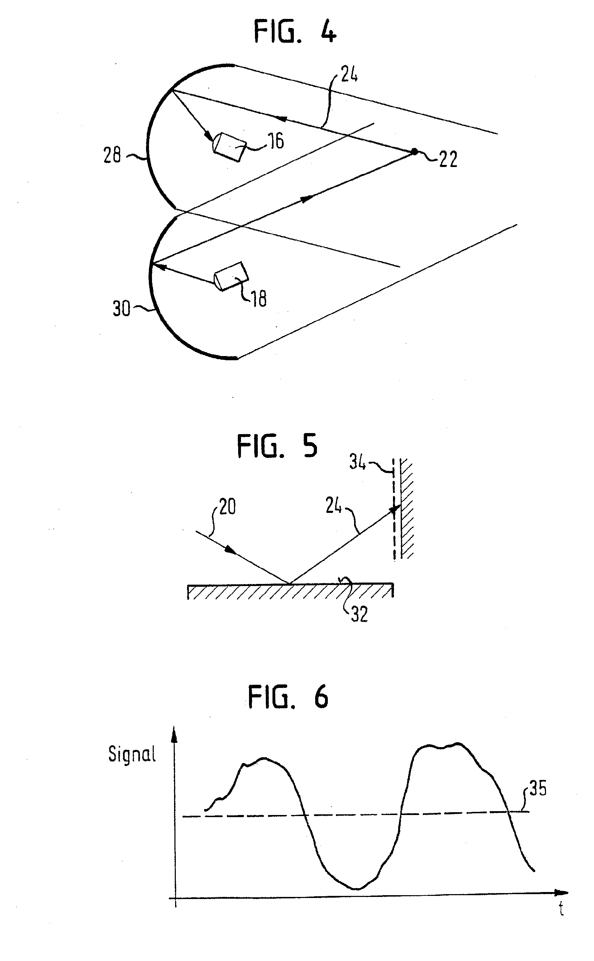

In Figur 4 ist eine Anordnung gezeigt, in welcher zwei parabelförmige Spiegel 28 und 30 vorgesehen sind, wobei hier eine Laserdiode 18 zur Erzeugung des Primärlichts das Licht in Richtung des parabelförmigen Spiegels 30 sendet, von dem dieses reflektiert wird und beispielsweise von einem Streuzentrum 22 gestreut wird, so daß das Streulicht 24 in Richtung auf den ebenfalls parabelförmigen Spiegel 28 gerichtet wird, wobei das auf den Spiegel 28 auftreffende Streulicht in Richtung auf die im Fokus angeordnete Fotodiode 16 umgelenkt wird.

Anhand der Figur 5 wird eine andere Ausgestaltung eines Aufbaus für die Streulichtmessung gezeigt, der dazu dienen soll, sowohl das Streulicht wie auch das Primärlicht zu messen und deren Quotienten zur Beurteilung der Kristallbildung heranzuziehen. Hierzu wird Primärlicht 20 auf eine als Spiegel ausgestaltete gekühlte Oberfläche 32 gerichtet, wobei auf dieser gekühlten Oberfläche die Kristalle entstehen. Das gestreute Licht 24 trifft auf ein Streifengitter 34, so daß ein Streifenmuster entsteht. Alternativ kann auch bereits das Primärlicht 20 als Streifenmuster eingestrahlt werden.

Anhand des in Figur 6 dargestellten Signalverlaufs kann erläutert werden, wie das Streulichtsignal eines bewegten Kristalls aussieht. Mit der strichlierten Linie ist der zugehörige Gleichanteil 34 des Signals bezeichnet. Um diesen herum schwankt das über die Zeit aufgenommene Streulichtsignal. Um nun den Einfluss bewegter Kristalle auf das Messergebnis zu reduzieren, wird das detektierte Signal in Gleich- und Wechselanteile aufgetrennt und der Gleichanteil wird anschließend um etwa den $\sqrt{2}$ - fachen Betrag des Effektivwertes des Wechselsignals verringert.

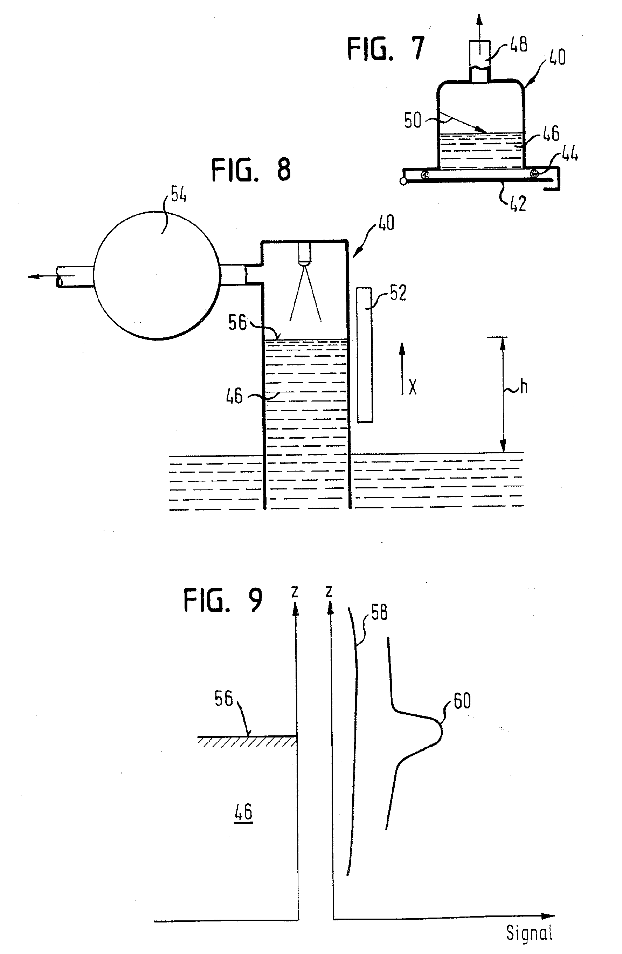

Zur Übersättigungserzeugung kann auch Lösungsmittel entzogen, beispielsweise verdampft werden. Hier entstehen nun Kristalle entweder an einer Membran oder an einer freien Oberfläche. Somit kann bei der Verdampfungskristallisation die bei der Kühlungskristallisation für die Bildung der Kristalle maßgebende gekühlte Fläche durch die Membrane bzw. die Grenzfläche zwischen Flüssigkeit und Gas ersetzt werden. Hier muss auch das Auftreten des Streulichts durch Kristallbildung gemessen werden. Einige Ausführunsvarianten zur Entziehung des Lösungsmittels sind im folgenden dargestellt. Anhand der Figur 7 ist schematisch eine Sonde 40 gezeigt, welche über eine Ventilklappe 42 gegenüber der Kristallisationsreaktorflüssigkeit verschließbar ist. Die Ventilklappe wird über Dichtringe 44 gegenüber der äußeren Strömung abgedichtet. Im inneren der Sonde 40 ist Lösung 46 enthalten. Über eine nicht näher dargestellte Pumpe wird in Pfeilrichtung über ein Rohr 48 die Atmosphäre über der Flüssigkeitsoberfläche der Lösung 46 evakuiert. Durch einen hier nur durch Pfeil dargestellten optischen Detektor 50, der beispielsweise demjenigen gemäß Figur 1 entsprechen kann, wird das Auftreten von Kristallen an der Phasengrenze beobachtet.

Eine weitere Ausgestaltung einer Sonde 40 ist anhand der Figur 8 erläutert. Dort wird im Unterschied zur Ausführungsform der Figur 7 kein Ventil eingesetzt und der Unterdruck wird innerhalb der Sonde 40 dadurch aufrecht erhalten, daß die Flüssigkeitssäule um die Höhe h gegenüber der übrigen Flüssigkeit ansteigt. Die Höhe der Flüssigkeitssäule ist ein Maß für den Unterdruck und kann optisch durch ein Fotodioden-Array 52 detektiert werden. Mittels einer Pumpe 54 wird der Raum oberhalb der Lösung 46 evakuiert. Anhand der Figur 9 ist das jeweilige Signal im Fotodioden-Array 52 gemäß der Sonde 40 nach Figur 8 dargestellt. Hier ist das gemessene Signal über der Höhe z aufgetragen. Im linken Teil ist die Phasengrenzfläche zwischen Lösung 46 und Gasatmosphäre oberhalb der Lösung gezeigt. Die Phasengrenzfläche ist mit 56 bezeichnet. Als Signal ist ein Signal 58 ohne Kristallisation und 60 mit Kristallisation aufgetragen, wobei hier der Signalverlauf 60 mit Kristallisation deutlich die Detektion der Kristalle im Bereich der Phasengrenzfläche zeigt.

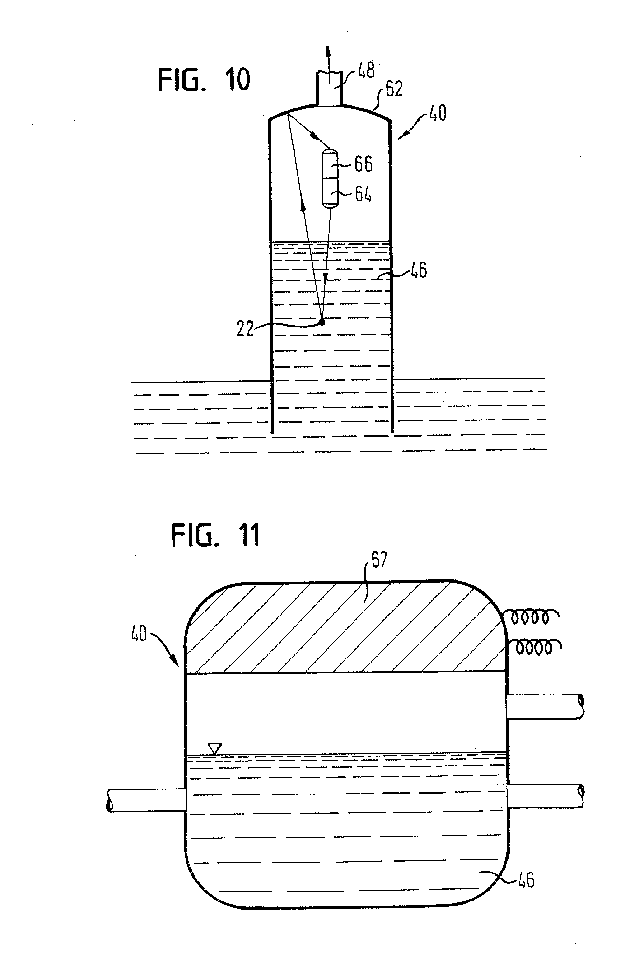

Eine weitere Ausgestaltung der Erfindung ergibt sich aus der Figur 10. Diese Sonde 40 stellt eine Abwandlung der in der Figur 8 dargestellten Sonde dar. Sie eignet sich für Stoffsysteme, bei denen die Kristalle schnell von der Phasengrenzfläche absinken, während die bereits beschriebene Sonde 40 gemäß Figur 8 in Stoffsystemen bevorzugt angewendet wird, in denen je nach Dichte an einer Oberfläche durch Verdampfen entstehende Kristalle über mehr oder weniger lange Zeiträume verbleiben. In der Sonde 40 gemäß Figur 10 ist der obere Bereich der Sonde als gewölbter Spiegel 62 ausgebildet. Hier setzt auch die Rohrleitung 48 zur Verbindung mit der Vakuumpumpe an. Innerhalb des gasgefüllten Raums, der über der Lösung 46 ausgebildet ist, ist einerseits eine Laserdiode 64 angeordnet, die in die Lösung 46 hineinstrahlt, wobei dort über ein absinkendes Kristall als Streuzentrum 22 das einfallende Primärlicht gestreut wird, und wobei das gestreute Licht über den Spiegel 62 in Richtung zu einer Fotodiode 66 reflektiert wird.

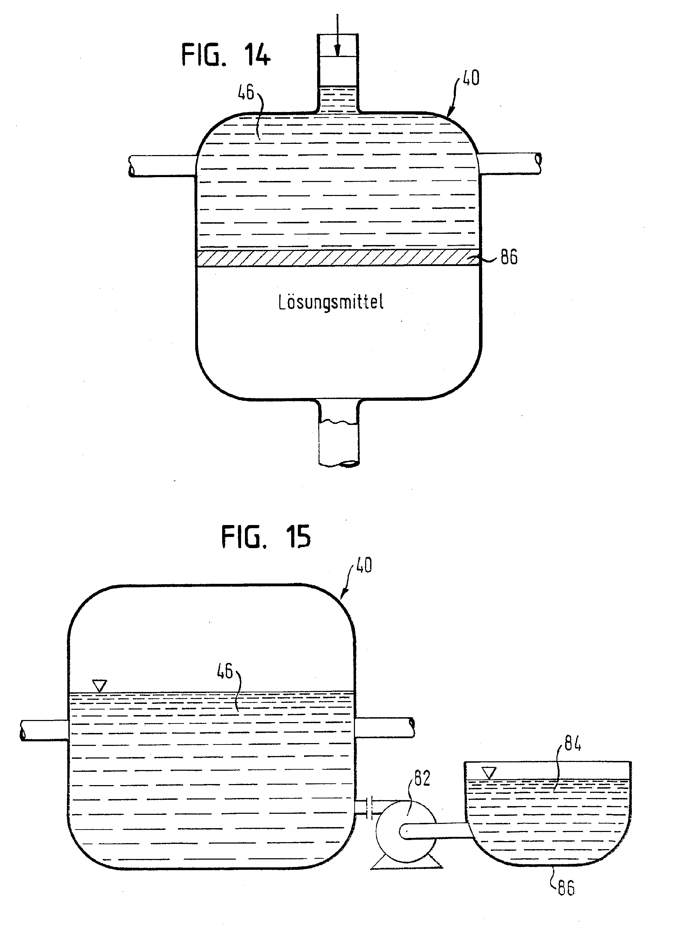

In Figur 11 ist eine Sonde 40 gezeigt, bei der oberhalb der Lösung 46 innerhalb des Gasraums der zu vermessenden Lösung ein Adsorbens 66, beispielsweise Silicagel oder Zeolith angeordnet ist. In diesem Adsorbens wird Lösungsmitteldampf adsorbiert. Die Regenierung des beladenen Adsorbens lässt sich beispielsweise durch eine elektrische Heizung erzielen. In der Figur 11 ist die optische Streulichtmessanordnung, die beispielsweise derjenigen gemäß Figur 1 entsprechen kann, nicht dargestellt. Auch in den folgenden Ausführungsvarianten bis einschließlich zu der Ausführungsvariante gemäß Figur 15 ist aus Vereinfachungsgründen diese optische Meßanordnung nicht gezeigt.

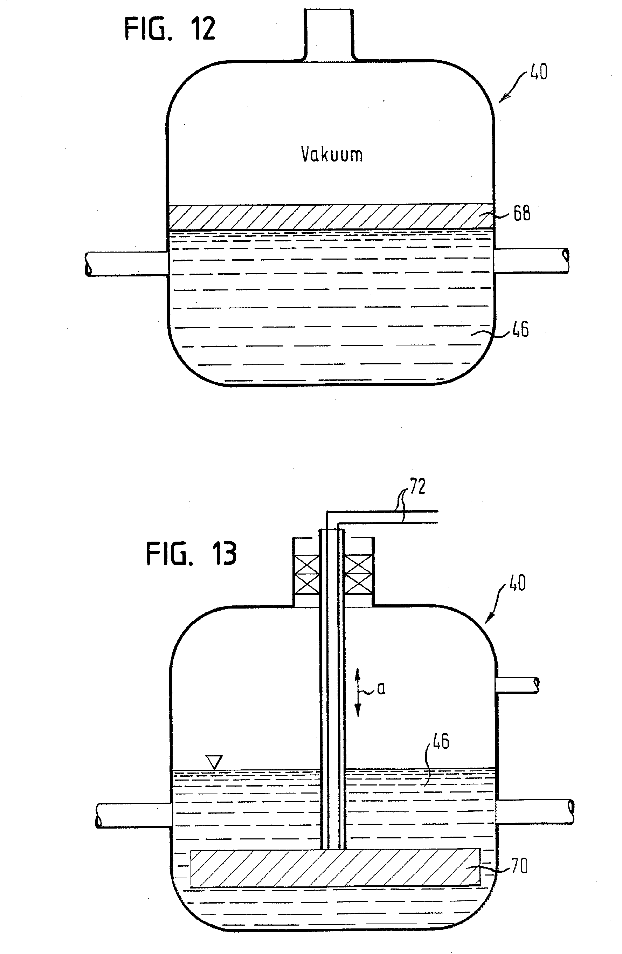

In der Sonde 40 entsprechend der Ausführungsvariante gemäß Figur 12 wird oberhalb der Lösung 46 im Gasraum über eine hier nicht näher dargestellte Vakuumpumpe ein Vakuum angelegt. Auf der Lösungsoberfläche liegt eine Pervaporationsmembran 68. Da an der lösungsseitigen Membranfläche die größte Übersättigung auftritt und dort die Kristalle entstehen, kann das Einsetzen der Kristallisation dort besonders einfach detektiert werden.

In der Ausführungsvariante gemäß Figur 13 weist die Sonde 40 innerhalb der Lösung 46 ein Adsorbens 70 zum Entzug des Lösungsmittels auf. Dieses Adsorbens 70 adsorbiert selektiv das Lösungsmittel, wobei dieses wiederum aus einem bestimmten Zeolith oder Molekularsieb bestehen kann. Die bei der Adsorption freigesetzte Adsorptionswärme führt zu einer Erwärmung und die Temperaturerhöhung ist ein Maß für die entfernte Lösungsmittelmenge, welche die zusätzliche Übersättigung bestimmt. Auch dieses Adsorbens ist über eine elektrische Heizung regenerierbar, wobei mit 72 hier die entsprechenden elektrischen Leitungen zur Versorgung der im Adsorbens angeordneten Heizung, die hier nicht näher dargestellt ist, bezeichnet sind. Zur Regenerierung wird das Adsorbens 70 in Pfeilrichtung a aus der Lösung herausgezogen.

In dem Ausführungsbeispiel gemäß Figur 14 ist eine Sonde 40 gezeigt, in der die Lösung 46 und der Gasraum von einem Druckgefäß umgeben sind. Die Lösung 46 und der Gasraum sind durch eine Umkehrosmosemembran 80 voneinander getrennt. Das Lösungsmittel lässt sich durch Umkehrosmose aus der Lösung 46 entfernen, wenn ein Druck aufgeprägt wird, der größer als der osmotische Druck ist. Auch bei dieser Umkehrosmose wird durch das Entfernen von Lösungsmittel in der Lösung eine zusätzliche Übersättigung erzeugt.

Eine additive Übersättigung lässt sich auch mit einer Sonde gemäß dem Ausführungsbeispiel nach Figur 15 erzielen, wobei hier die Sonde 40 nur schematisch dargestellt ist. Hier wird der Lösung 46 über eine Pumpe 82 ein Verdrängungsmittel 84 aus einem Verdrängungsmittelreservoir 86 zugeführt. Das Verdrängungsmittel bewirkt eine Erhöhung der Übersättigung und die Menge des zugegebenen Stoffes ist ein Maß für die zusätzliche Übersättigung.

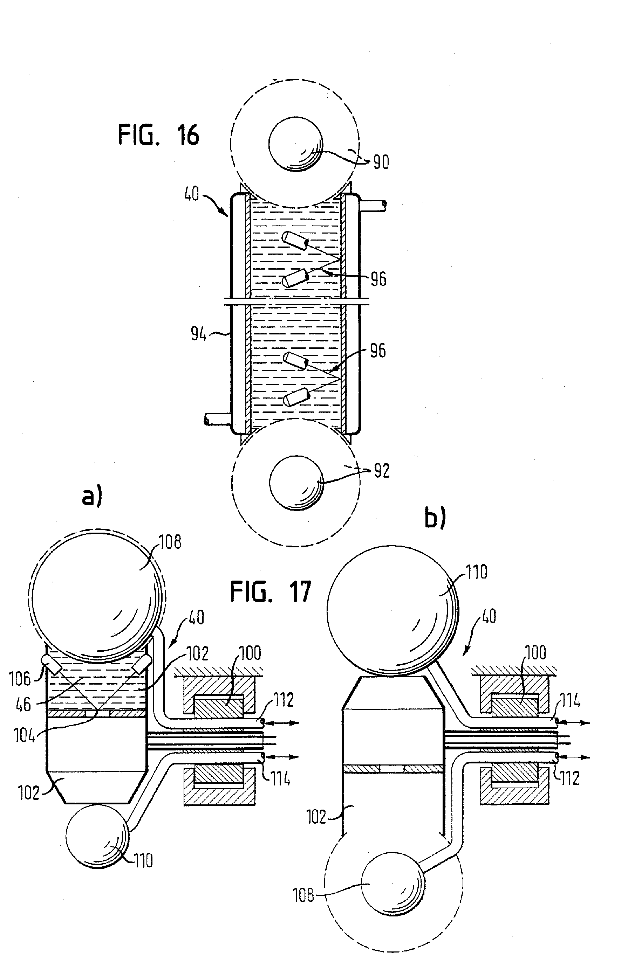

Anhand der Figur 16 wird eine Sonde 40 erläutert, die als quasi offene rohrförmige Meßkammer ausgebildet ist. Die gesamte Sonde 40 ist als Pervaporationsmodul ausgeführt. Die Öffnungsdauer und Weite der Meßkammer der Sonde 40 lässt sich durch pneumatisch be- und entspannbare Ballons 90, 92 oder durch andere hier nicht näher dargestellte pneumatische Absperrorgane variieren. Die Zylinderfläche der in der Sonde verwirklichten Meßkammer ist als Pervaporationsrohrmodul mit einem evakuierbaren Doppelmantel 94 ausgebildet, aus welchem der Lösungsmitteldampf absaugbar ist.

Der Entzug von Lösungsmittel führt zu einer Aufkonzentrierung und Abkühlung der Lösung sofern die Löslichkeit C* nicht mit der Temperatur fällt, also falls gilt dc*/dT > 0. Beide Effekte bewirken eine Erhöhung der Übersättigung, so daß es auf der Membranoberfläche und/oder im Volumen um die Membranoberfläche zu einer Kristallbildung kommt, welche optisch detektiert wird. Hierfür kommen grundsätzlich die Meßmethoden mittels Streulicht mit oder ohne Spiegelanordnung in Frage. In der hier dargestellten Ausführungsvariante sind zwei Streulichtanordnungen 96 gezeigt, die der Ausführungsvariante gemäß Figur 1 entsprechen. Nach einer Meßung wird der Meßkammerinhalt in Folge offener Ventile der Strömung im hier nicht näher dargestellten Kristallisationsreaktor durch frische Lösung ersetzt, nachdem vorher die Verkrustung die Membran durch Rückspülen mit warmem Lösungsmittel der untersättigten Lösung entfernt wurde.

Eine weitere Ausgestaltung der Erfindung ist anhand der Figuren 17a und 17b dargestellt. Die Sonde 40 ist hier um 180° schwenkbar, wobei die Schwenkbarkeit durch ein Schwenklager 100 realisiert ist. Die Sonde 40 weist hier eine Meßkammer 102, in welcher die zusätzliche Übersättigung der Lösung durch Kühlen oder Heizen, Entzug von Lösungsmittel durch Verdampfen, Pervaporation, Adsorption und/oder Extraktion oder die Zugabe eines Verdrängungsmittels erreicht werden kann. Hier dargestellt ist beispielhaft das Kühlen mittels eines Kühlelementes 104. Der Beginn der Kristallisation lässt sich wie auch bereits zuvor beschrieben, mittels eines Streulichtdetektors 106 ermitteln. Wie in Figur 17 dargestellt, sind hier jeweils zwei Kammern 102 ausgebildet, die gegenüber der umgebenden Lösung innerhalb des Kristallisationsreaktors über pneumatisch aufblasbare Luftballons 108, 110 verschließbar sind. Die Luftballons werden über Pneumatikleitungen 112, 114 mit Luft befüllt bzw. bei Ablassen der Luft wird diese Luft durch diese Pneumatikleitungen abgeführt. Die Luftballons 108 bzw. 110 dienen nicht nur zum Verschließen der jeweiligen Meßkammer 106, sondern sie dienen gleichzeitig als Auftriebskörper zum Verschwenken der gesamten Sonde 40 um 180°. Im folgenden wird die Funktion der Sonde 40 gemäß der Ausgestaltung nach Figur 17 beschrieben. In Figur 17a ist der Ballon 108 mit Luft gefüllt und verschließt die mit Lösung 46 gefüllte Meßkammer 106. Diese Lösung ist weitgehend kristallfrei. Über die Meßvorrichtung 106 wird beim Kühlen der Fläche des Kühlelements 104 das Auftreten der Kristalle durch Streulicht ermittelt. Nach Erhalt des Meßeffekts wird die Sensoroberfläche aufgeheizt und/oder gespült. Der Ballon 108 wird entspannt. Dagegen wird der Ballon 110 pneumatisch bespannt, so daß sich auf Grund des Auftriebs des Ballons 110 der Sensor um 180 dreht und die Position gemäß Figur 17b einnimmt. Durch die Wirkung der turbulenten Strömung im Kristallisator wird die Lösung im Meßraum 102, der nunmehr nach unten geschwenkt ist durch weitgehend kristallfreie Lösung aus dem Kristallisationsreaktor ersetzt. Nach beendetem Austausch und gegebenenfalls Absedimentieren von in der Meßkammer enthaltenem Kristallisat wird der Ballon 110 wieder entspannt und der Ballon 108 wieder bespannt, so daß das Meßkammervolumen der Meßkammer 102 wieder von der übrigen Lösung im Kristallisationsreaktor getrennt ist und sich der Sensor 40 wieder um 180° dreht. Nach Erreichen der Ausgangsstellung gemäß der Figur 17a kann der Sensor zusätzlich noch, beispielsweise durch einen Elektromagneten, fixiert werden, so daß die Übersättigung in dieser Stellung nochmals in der bereits zuvor mehrfach beschriebenen Art und Weise gemessen werden kann.

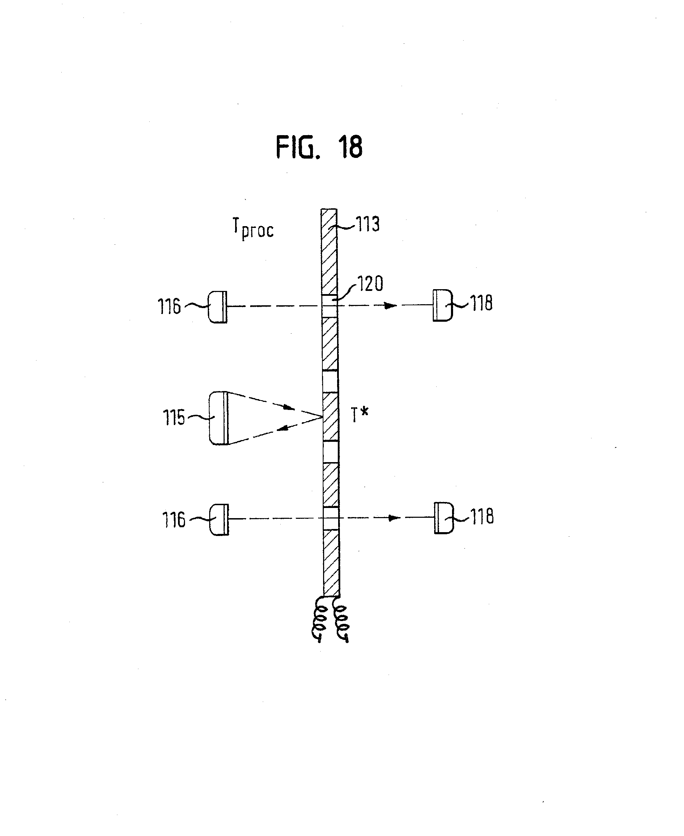

Anhand der Figur 18 wird schließlich eine abgewandelte Ausführungsvariante des Meßverfahrens zur Übesättigungsmeßung erläutert. Dabei ist zu berücksichtigen, daß die Übersättigung einer Lösung grundsätzlich und vorzugsweise durch optische Detektion dadurch bestimmt werden kann, daß eine geschlossene oder teilweise offene Feststofffläche oder ein angrenzendes Flüssigkeitsvolumen durch Heizen und/oder Kühlen auf der Gleichgewichtstemperatur $T^*$ der übersättigten Lösung gehalten wird. Damit lösen sich bei Überschreiten der Gleichgewichtstemperatur $T^*$ im Falle von $dC^*/dT > 0$ Kristalle auf und bei Unterschreiten von $T^*$ (falls $dC^*/dT > 0$) bilden sich Kristalle. Wenn $dC^*/dT < 0$ ist, muß geheizt statt gekühlt und gekühlt statt geheizt werden. Mit der Steigerung $dC^*/dT$ der Gleichgewichtskurve und der Prozesstemperatur $T_{proc}$ der übersättigten Lösung beträgt die Prozeßübersättigung $\Delta C_{proc}$ dann

$$\frac{dC^*}{dT}(T^* - T_{proc}).$$

Eine entsprechende Meßeinrichtung, in der die Feststoffoberfläche bzw. das angrenzende Flüssigkeitsvolumen auf Gleichgewichtstemperatur $T^*$ gehalten wird, ergibt sich aus der Abbildung 18 in welcher eine beheizbare oder kühlbare Fläche 112 die Gleichgewichtstemperatur $T^*$ einstellt, wobei das Erreichen der Gleichgewichtstemperatur dadurch erkannt werden kann, daß mittels der Sensoren 114 bzw. 116/118 über Streulicht das Auftreten von Kristallen auf der Oberfläche der Platte 112 detektiert werden kann oder das Auftreten von Verkrustungen in den Öffnungen 120 innerhalb der Platte 112 festgestellt werden kann, wie dies anhand des Sensorpaars 116/118 in der Figur 18 angedeutet ist. Sobald die ersten Streulichtsignale das Entstehen von Kristallen anzeigen, wird geheizt bzw. gekühlt, um die Kristalle gerade wieder aufzulösen. Dieser Vorgang wird iteriert, um die entsprechende Gleichgewichtstemperatur $T^*$ möglichst genau einzustellen.

## Patentansprüche

1. Verfahren zur Messung der Übersättigung in einem Kristallisationsreaktor, bei dem durch Kühlen, Heizen, Lösungsmittelentzug, Zugabe eines weiteren Stoffes oder durch Kombination der vorgenannten Maßnahmen eine Zone gebildet wird, in welcher der Quotient aus der Konzentration des gelösten Stoffes und der zugehörigen Sättigungskonzentration höher als im übrigen Kristallisationsreaktor ist oder in der die Konzentration des gelösten Stoffes im wesentlichen seiner zugehörigen Sättigungskonzentration entspricht,
**dadurch gekennzeichnet,**
**daß** in diese Zone Strahlung im IR-, sichtbaren oder UV-Bereich eingespeist wird und daß das Auftreten von Kristallen in dieser Zone durch Messung von Streustrahlung detektiert wird.

2. Verfahren nach Anspruch 1, **dadurch gekennzeichnet, daß** sowohl die Streustrahlung als auch die Primärstrahlung gemessen wird und daß deren Quotient zur Beurteilung der Kristallbildung genutzt wird.

3. Verfahren nach Anspruch 1 oder 2, **dadurch gekennzeichnet, daß** der Einfluß bewegter Kristalle auf das Meßergebnis dadurch reduziert wird, daß das detektierte Signal in Gleich- und Wechselanteile aufgetrennt wird und daß der Gleichanteil anschließend um etwa den $\sqrt{2}$ - fachen Betrag des Effektivwertes des Wechselsignals verringert wird.

4. Verfahren nach einem der Ansprüche 1 bis 3, **dadurch gekennzeichnet, daß** gleichzeitig oder zeitlich nacheinander Strahlung unterschiedlicher Wellenlänge eingestrahlt wird, um zwischen Kristallen verschiedener Größe unterscheiden zu können.

5. Verfahren nach einem der Ansprüche 1 bis 4, **dadurch gekennzeichnet, daß** eine geschlossene oder teilweise offene Sensoroberfläche oder ein daran angrenzendes Volumen durch zeitabhängiges oder zeitlich konstantes Heizen und/oder Kühlen auf der Gleichgewichtstemperatur T* gehalten wird.

6. Verfahren nach einem der Ansprüche 1 bis 5, **dadurch gekennzeichnet, daß** es hintereinander und/oder gleichzeitig an verschiedenen Stellen innerhalb des Kristallisationsreaktors durchgeführt wird.

7. Vorrichtung zur Durchführung eines der Verfahren nach einem der Ansprüche 1 bis 6, **dadurch gekennzeichnet, daß** sie aus einer Sonde besteht.

8. Vorrichtung zur Durchführung eines der Verfahren nach einem der Ansprüche 1 bis 6 oder nach Anspruch 7, **dadurch gekennzeichnet, daß** die Strahlung durch einen Lichtleiter einspeisbar ist und durch eine ohne Streuung entkoppelte Lichtleitfaser auskoppelbar ist.

9. Vorrichtung zur Durchführung eines der Verfahren nach einem der Ansprüche 1 bis 6 oder nach Anspruch 7 , **dadurch gekennzeichnet, daß** sie eine Linsen- oder Spiegeloptik umfaßt, durch die ein möglichst großer Teil der gesamten Zone bestrahlt wird und ein möglichst großer Teil der Streustrahlung einem Detektor zuführbar ist.

10. Vorrichtung nach einem der Ansprüche 7 bis 9, **dadurch gekennzeichnet, daß** in der Sonde eine Membran angeordnet ist, die für das Lösungsmittel einen deutlich kleineren Durchtrittwiderstand aufweist als für das Kristallisat, so daß über sie Lösungsmittel absaugbar ist.

11. Vorrichtung nach einem der Ansprüche 7 bis 9, **dadurch gekennzeichnet, daß** die Sonde geschlossen ist und daß über Anlegen eines Unterdrucks Lösungsmittel verdampfbar ist.

12. Vorrichtung nach einem der Ansprüche 7 bis 9, **dadurch gekennzeichnet, daß** die Sonde offen ist und daß nach Anlegen des Unterdrucks zum Verdampfen des Lösungsmittels dieser durch Ansteigen der Flüssigkeitssäule über die Oberfläche des Kristallisierreaktors hinaus aufrechterhaltbar ist.

13. Vorrichtung nach Anspruch 12, **dadurch gekennzeichnet, daß** die Höhe des Flüssigkeitsniveaus in der offenen Sonde durch einen optischen Sensor, vorzugsweise eine Photodiodenzeile, bestimmbar ist.

14. Vorrichtung nach einem der Ansprüche 7 bis 9, **dadurch gekennzeichnet, daß** in der Sonde ein Adsorbens zur Adsorption des Lösungsmitteldampfes angeordnet ist.

15. Vorrichtung nach einem der Ansprüche 7 bis 9, **dadurch gekennzeichnet, daß** in der Sonde ein Adsorbens zur Adsorption des Lösungsmittels aus der Lösung angeordnet ist und daß ein Temperaturfühler zur Detektion der freigesetzten Adsorptionswärme vorhanden ist.

16. Vorrichtung nach einem der Ansprüche 7 bis 9, **dadurch gekennzeichnet, daß** in der Sonde eine Pervaporationsmembran angeordnet ist, über der zur Erzeugung eines treibenden Gefälles zum Entzug des Lösungsmittels aus der Lösung ein Raum evakuierbar ist.

17. Vorrichtung nach einem der Ansprüche 7 bis 9, **dadurch gekennzeichnet, daß** die Sonde als Druckgefäß ausgebildet ist und daß sie eine Umkehrosmosemembran enthält.

18. Vorrichtung nach einem der Ansprüche 7 bis 9, **dadurch gekennzeichnet, daß** die Sonde mit einem Verdrängungsmittelspeicher verbunden ist, über den Verdrängungsmittel zur Erzeugung der Übersättigung in die Lösung einpumpbar ist.

**19.** Vorrichtung nach Anspruch 16, **dadurch gekennzeichnet, daß** die Sonde als Doppelmantelgefäß ausgebildet ist, wobei die erste die Meßkammer definierende Wandung die Pervaporationsmembran ist, und daß die im wesentlich zylinderförmige Meßkammer an ihren Enden über Ventile verschließbar ist.

**20.** Vorrichtung nach Anspruch 19, **dadurch gekennzeichnet, daß** die Ventile durch aufblasbare Ballone gebildet sind.

**21.** Vorrichtung nach einem der Ansprüche 7 bis 9, **dadurch gekennzeichnet, daß** die Sonde als um 180° schwenkbare Meßkammer ausgebildet ist, und daß die offenen Enden der Sonde über mit Gas füllbare Ballone verschließbar sind, wobei die Ballone gleichzeitig als Auftriebskörper zum Verschwenken der Meßkammer dienen.

FIG. 1

FIG. 2

Signal

Kristallisation

FIG. 3

# FIG. 4

# FIG. 5

# FIG. 6

FIG. 7

FIG. 8

FIG. 9

# FIG. 10

# FIG. 11

FIG. 12

Vakuum

40

68

46

FIG. 13

72

40

a

46

70

FIG. 14

46

40

86

Lösungsmittel

FIG. 15

40

46

84

82

86

FIG. 16

90

40

96

94

96

92

a)

108

FIG. 17

40

106

46

104

102

102

100

112

114

110

b)

110

40

100

114

102

112

108

## FIG. 18

$T_{proc}$

113

120

116

118

115

T*

116

118